# EUROPÄISCHE PATENTSCHRIFT

(11) **EP 1 754 619 B1**
(45) Veröffentlichungstag und Bekanntmachung des Hinweises auf die Patenterteilung: **02.03.2011**
(21) Anmeldenummer: 06011922.9
(22) Anmeldetag: 09.06.2006
(51) Int. Cl.: B60K 5/12

(54) **Vorrichtung zum Befestigen eines Aggregatelagers**
Device for mounting an engine support
Dispositif pour attacher un support de moteur

(30) Priorität: 19.08.2005 DE 102005039312
(43) Veröffentlichungstag der Anmeldung: 21.02.2007
(73) Patentinhaber: AUDI AG, 85045 Ingolstadt (DE)
(72) Erfinder: Rugies, Stefan, 85120 Hepberg (DE); Vollmann, Stefan, 97493 Bergrheinfeld (DE); Hougardy, Peter, 85114 Buxheim (DE)
(74) Vertreter: Asch, Konrad

(56) Entgegenhaltungen:
- EP-A- 1 491 790
- DE-A1- 19 961 679

## Beschreibung

Die Erfindung betrifft eine Vorrichtung zum schwingungsdämpfenden Befestigen eines Aggregatelagers an einem Tragarm eines Aggregates, insbesondere für Kraftfahrzeuge, gemäß dem Oberbegriff des Patentanspruches 1.

Die hauptsächliche Belastungsrichtung der gattungsgemäßen Aggregatelager (insbesondere Motor- und/oder Getriebelager von Kraftfahrzeugen) liegt im wesentlichen entsprechend der statischen Grundbelastung in senkrechter Richtung (Z-Achse), die dynamische Belastung in bekannter Weise auch in X- und Y-Richtung. Eine gängige Verschraubung des Sockelteiles des Tragarmes mit dem Lagerkern des Aggregatelagers liegt in der Ausrichtung der Mittelachse der Befestigungsschraube parallel oder koaxial zur hauptsächlichen Belastungsrichtung des Aggregatelagers. Probleme können sich ggf. aber durch eine schlechte Zugänglichkeit bei der Montage des Aggregates ergeben.

Aufgabe der Erfindung ist es, eine Vorrichtung zum Befestigen des Tragarmes am Aggregatelager vorzuschlagen, mittels der bei ggf. erleichterter Montage eine zuverlässige Schraubverbindung in allen Belastungsrichtungen herstellbar ist.

Diese Aufgabe wird erfindungsgemäß mit den kennzeichnenden Merkmalen des Patentanspruches 1 gelöst. Vorteilhafte Weiterbildungen der Erfindung beinhalten die weiteren Patentansprüche.

Erfindungsgemäß wird vorgeschlagen, dass die Mittelachse der Schraube im wesentlichen senkrecht zur hauptsächlichen Lagerbelastungsrichtung verläuft und dass das Sockelteil und der Lagerkern zusätzlich zumindest in der Lagerbelastungsrichtung formschlüssig zusammenwirken. Durch die vorgeschlagene Kombination kann die Schraube montagegünstig angeordnet werden und es ist trotzdem zumindest in der hauptsächlichen Lagerbelastungsrichtung (Senkrechten) eine formschlüssige Verbindung sichergestellt. Ferner bewirkt der Formschluss eine Verdrehsicherung, die Verspannungen im Aggregatelager vermeidet.

Bei der Erfindung sind am Lagerkern die Lageranschlussfläche überragende Vorsprünge ausgebildet , die zumindest teilweise das Sockelteil im Anschlussbereich umfassen. Die Vorsprünge sind fertigungstechnisch einfach z.B. durch Angießen an den Lagerkern oder durch entsprechendes Abfräsen der im übrigen planen Anschlussfläche am Lagerkern herstellbar und können in jeder gewünschten Belastungsrichtung wirken.

Besonders vorteilhaft können die Vorsprünge und der Anschlussbereich des Sockelteiles V-förmig ausgeführt sein. Dies ermöglicht in besonders einfacher Weise eine spielfreie, formschlüssige Verbindung bei einer besonders einfachen Montage, insbesondere wenn die V-förmigen Vorsprünge in der statischen Lagerbelastungsrichtung konvergieren, also nach oben offen ausgeführt sind.

Zusätzlich können die Vorsprünge und der korrespondierende Anschlussbereich des Sockelteiles konisch zueinander ausgerichtet sein, so dass mit dem Festziehen der Schraube der Formschluss zwischen den Vorsprüngen und dem Sockelteil noch erhöht, bzw. eine vorteilhafte Klemmwirkung erzielt wird.

Das Sockelteil kann bevorzugt derart ausgeführt sein, dass die Länge der die Schraube aufnehmenden Bohrung zumindest das 4-fache des Nenndurchmessers der Schraube beträgt. Dies erhöht ebenfalls die Steifigkeit der Schraubverbindung durch die größere Stützbasis, bei konstanter Vorspannkraft.

Des weiteren kann die Bohrung im Lagerkern einen Abschnitt größeren Durchmessers aufweisen, der den Kopf der Schraube innerhalb des Lagerkerns aufnimmt. Neben der baulich günstigen Anordnung des Schraubenkopfes liegen die Anschlussflächen und die Schraubenkopf-Auflagefläche vorteilhaft im Bereich der Mittelachse des Aggregatelagers.

Zur Montageerleichterung bei einem Einbau oder Ausbau des Aggregates kann ferner bei einer im wesentlichen senkrechten Lagermittelachse die Mittelachse der Schraube um ca. 6 Grad gegenüber einer Horizontalen derart geneigt sein, dass gedachte Verlängerungen der senkrecht dazu verlaufenden Anschlussflächen am Sockelteil und Lagerkern die Lagermittelachse oberhalb der Schraube schneiden.

Schließlich kann zusätzlich das Aggregatelager derart angeordnet sein, dass dessen Mittelachse ca. 16 Grad gegenüber einer Senkrechten und entgegengesetzt zur Neigung der Anschlussflächen von Sockelteil und Lagerkern geneigt ist.

Mehrere Ausführungsbeispiele der Erfindung sind im folgenden mit weiteren Einzelheiten näher erläutert. Die schematische Zeichnung zeigt in:
- **Fig. 1**: eine Vorrichtung zum Befestigen eines Tragarmes eines Aggregates an einem Lagerkern eines Aggregatelagers, das an einem Hilfsrahmen für ein Kraftfahrzeug angeordnet ist;
- **Fig. 2**: den Lagerkern des Aggregatelagers und das Sockelteil des Tragarmes nach Fig. 1 in raumbildlicher Darstellung;
- **Fig. 3**: eine Ansicht auf die Anschlussfläche des Lagerkernes des Aggregatelagers nach den Fig. 1 und 2; und
- **Fig. 4**: einen senkrechten Längsschnitt entlang der Bohrungsmittelachse für die Schraube durch das Sockelteil des Tragarmes und den Lagerkern des Aggregatelagers.

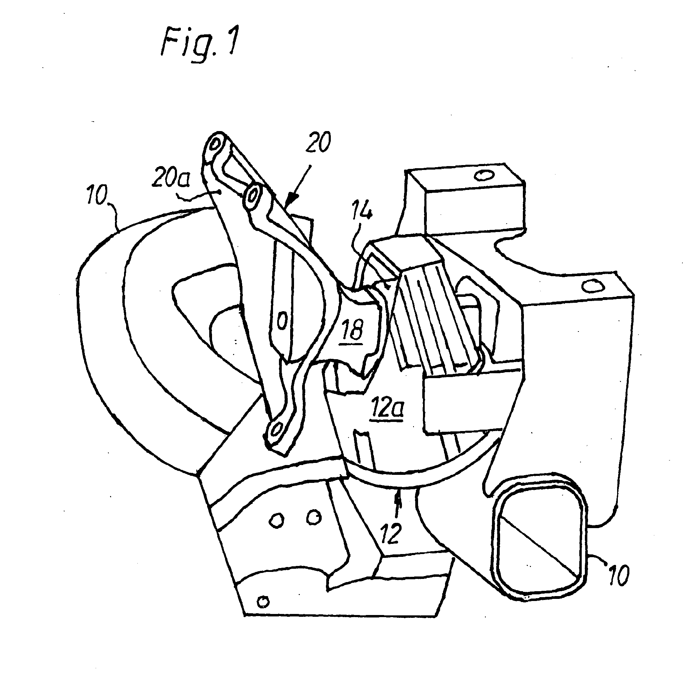

In der **Fig. 1** ist teilweise ein Hilfsrahmen 10 für Kraftfahrzeuge dargestellt, an dem in nicht weiter beschriebener Weise das Gehäuse 12a eines schwingungsdämpfenden Aggegatelagers 12 befestigt ist. Das Aggregatelager 12 kann in bekannter Weise ein Gummi-Metalllager, ein hydraulisch gedämpftes Lager etc. sein.

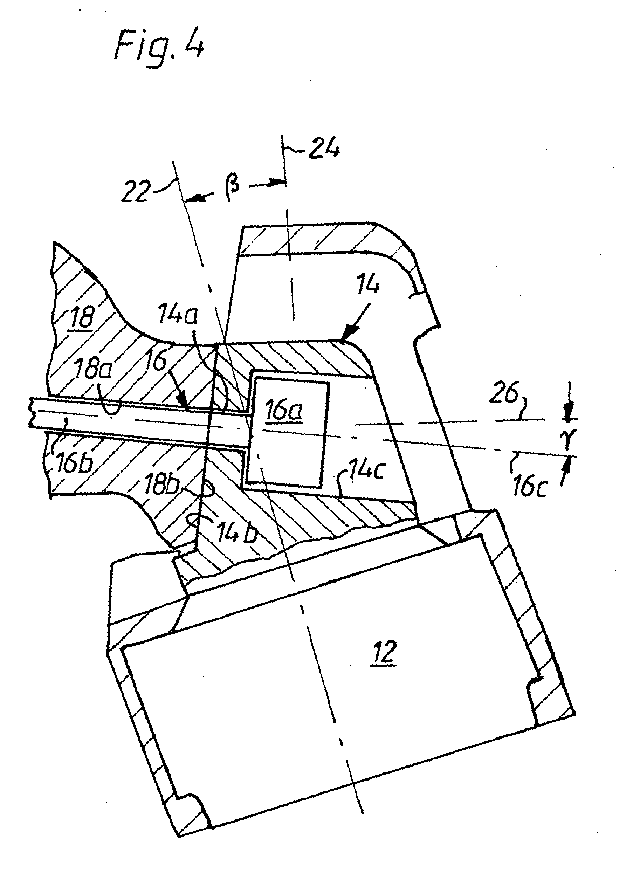

Von dem Aggregatelager 12 ragt nach oben ein Lagerkern 14 ab, der mittels einer Schraube 16 (**Fig. 4**) mit einem Sockelteil 18 eines Tragarmes 20 fest verschraubt ist. Der Tragarm 20 weist einen dreidimensional geformten Flanschabschnitt 20a auf, über den er mittels mehrerer Schrauben mit dem Aggregat des Kraftfahrzeuges (z.B. einer Brennkraftmaschine, nicht dargestellt) fest verbunden ist.

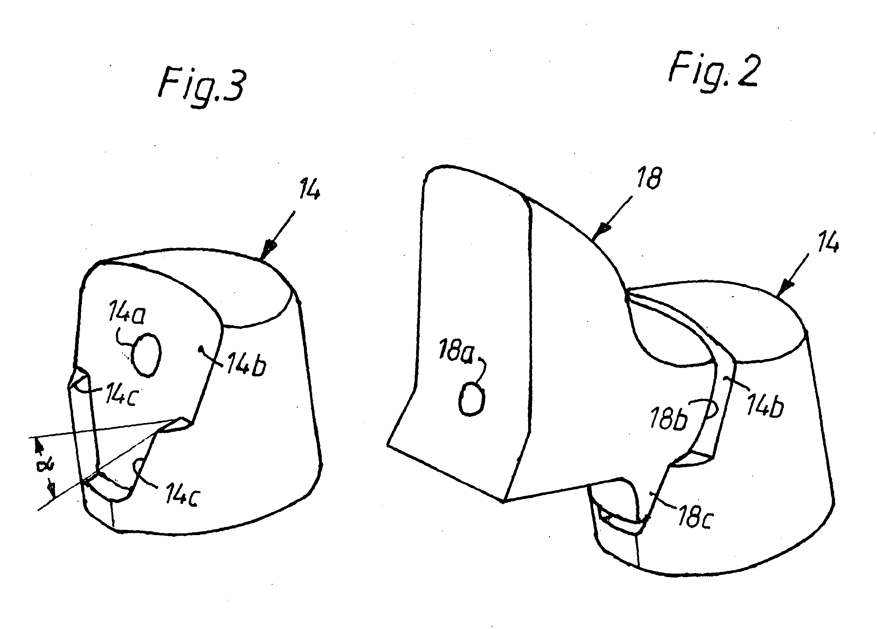

Gemäß den **Fig. 2 bis 4** erstreckt sich die Befestigungsschraube 16 durch eine Bohrung 18a im Sockelteil 18 und eine Bohrung 14a im Lagerkern 14, wobei der Kopf 16a der Schraube 16 in einem im Durchmesser erweiterten Abschnitt 14c des Lagerkernes 14 aufgenommen ist.

Die Bohrungen 18a, 14a schneiden dabei die senkrecht zu den Bohrungen 18a, 14a ausgerichteten, planen Anschlussflächen 18b, 14b des Sockelteiles 18 bzw. des Lagerkernes 14; ferner ist in das Sockelteil 18 in einem Abstand von zumindest des 4-fachen Nenndurchmessers der Schraube 16 von der Anschlussfläche 18b ein Gewindeabschnitt (ohne Bezugszeichen) eingearbeitet, in den der Gewindeschaft 16b der Schraube 16 eingeschraubt und gehalten ist.

An der Anschlussfläche 14b des Lagerkernes 14 sind die Anschlussfläche 14b überragende Vorsprünge 14c vorgesehen, die V-förmig (vgl. **Fig. 3**) und nach oben offen ausgerichtet sind und die im montierten Zustand am Sockelteil 18 dessen an die Anschlussfläche 18b anschließenden Umfangsbereiche 18c formschlüssig umfassen. Die Umfangsbereiche 18c und die Vorsprünge 14c sind ferner konisch in einem Winkel α zu einer zur Mittelachse 16c der Schraube 16 Parallelen ausgeführt (**Fig. 3**).

In der **Fig. 4** ist die Mittelachse 22 des Aggregatelagers 12 eingezeichnet, die gegenüber der statischen Lagerbelastungsrichtung 24 (Senkrechte, Z-Achse) um einen Winkel β von 16 Grad nach oben innen geneigt ist.

Ferner ist ersichtlich, dass die Mittelachse 16c der Schraube 16 bzw. der entsprechenden Bohrungen 18a, 14a und 14c gegenüber einer Horizontalen 26 (Y-Richtung) in einem Winkel γ von 6 Grad derart entgegengesetzt geneigt ist, dass gedachte Verlängerungen der senkrecht dazu verlaufenden Anschlussflächen 18b, 14b zwischen Sockelteil 18 und Lagerkern 14 die Lagermittelachse 22 oberhalb der Schraube 16 schneiden.

Bei der Montage des Aggregatelagers 12 am Sockelteil 18 des Tragarmes 20 (oder umgekehrt) werden die beiden Anschlussflächen 18b, 14b in Überdeckung gebracht, wobei die nach unten konvergierenden Vorsprünge 14c das korrespondierend geformte Sockelteil 18 umfassen und somit formschlüssig und verdrehfest in der X-Richtung und nach unten in der Z-Richtung halten.

Sodann wird die Schraube 16 eingesetzt und durch deren Festziehen der Formschluss und die Klemmwirkung zwischen den Vorsprüngen 14c und dem Sockelteil 18 durch die konische Gestaltung mit dem Winkel α noch erhöht, so dass ein hochfester Schraubverbund geschaffen ist.

## Patentansprüche

1. Vorrichtung mit einem an einem Tragarm (20) eines Aggregates befestigten schwingungsdämpfenden Aggregatelager, insbesondere für Kraftfahrzeuge, wobei ein vom Aggregatelager (12) abragender Lagerkern (14) mittels einer Schraube (16) mit dem Sockelteil (18) des Tragarmes (20) durch entsprechende Bohrungen (14a, 18a) hindurch verschraubt ist und die Schraube (16) korrespondierende Anschlussflächen (14b, 18b) des Lagerkernes (14) und des Sockelteiles (18) durchdringt, wobei die Mittelachse (16c) der Schraube (16) im wesentlichen senkrecht zur senkrechten Lagerbelastungsrichtung (24) des Aggregatelagers (12) verläuft und wobei das Sockelteil (18) und der Lagerkern (14) zusätzlich zumindest in der Lagerbelastungsrichtung (24) formschlüssig zusammenwirken, **dadurch gekennzeichnet, dass** am Lagerkern (14) die Lageranschlussfläche (14b) überragende Vorsprünge (14c) ausgebildet sind, die zumindest teilweise das Sockelteil (18) im Anschlussbereich (18c) umfassen.

2. Vorrichtung nach Anspruch 1, **dadurch gekennzeichnet, dass** die Vorsprünge (14c) und der Anschlussbereich (18c) des Sockelteiles (18) V-förmig ausgeführt sind.

3. Vorrichtung nach Anspruch 2, **dadurch gekenntzeichnet, dass** die V-förmigen Vorsprünge (14c) in der statischen Lagerbelastungsrichtung nach unten konvergieren.

4. Vorrichtung nach einem der vorhergehenden Ansprüche, **dadurch gekennzeichnet, dass** die Vorsprünge (14c) und der korrespondierende Anschlussbereich (18c) des Sockelteiles (18) konisch (Winkel α) zueinander ausgerichtet sind.

5. Vorrichtung nach einem der vorhergehenden Ansprüche, **dadurch gekennzeichnet, dass** das Sockelteil (18) derart ausgeführt ist, dass die Länge der die Schraube (16) aufnehmenden Bohrung (18a) zumindest das 4-fache des Nenndurchmessers der Schraube (16) beträgt.

6. Vorrichtung nach einem der vorhergehenden Ansprüche, **dadurch gekennzeichnet, dass** die Bohrung (14a) im Lagerkern (14) einen Abschnitt (14c) größeren Durchmessers aufweist, der den Kopf (16a) der Schraube (16) innerhalb des Lagerkerns (14) aufnimmt.

7. Vorrichtung nach einem der vorhergehenden Ansprüche, **dadurch gekennzeichnet, dass** bei einer im wesentlichen senkrechten Lagerbelastungsrichtung die Mittelachse (16c) der Schraube (16) um ca. 6 Grad gegenüber einer Horizontalen (24) derart geneigt ist, dass gedachte Verlängerungen der senkrecht dazu verlaufenden Anschlussflächen (18b, 14b) am Sockelteil (18) und Lagerkern (14) die Lagermittelachse (22) oberhalb der Schraube (16) schneiden.

8. Vorrichtung nach Anspruch 7, **dadurch gekennzeichnet, dass** das Aggregatelager (12) derart angeordnet ist, dass dessen Mittelachse (22) ca. 16 Grad gegenüber einer Senkrechten (24) und entgegengesetzt zur Neigung der Anschlussflächen (18b, 14b) von Sockelteil (18) und Lagerkern (14) geneigt ist.

## Claims

1. Device having a vibration-damping engine mount fastened to a supporting arm (20) of an engine, in particular for motor vehicles, with a mount core (14) which projects from the engine mount (12) being screwed to the pedestal part (18) of the supporting arm (20) by means of a screw (16) through corresponding bores (14a, 18a), and with the screw (16) extending through corresponding connecting surfaces (14b, 18b) of the mount core (14) and of the pedestal part (18), with the central axis (16c) of the screw (16) running substantially perpendicular to the vertical mount loading direction (24) of the engine mount (12), and with the pedestal part (18) and the mount core (14) additionally interacting in a positively locking fashion at least in the mount loading direction (24), **characterized in that** protrusions (14c) which project beyond the mount connecting surface (14b) are formed on the mount core (14), which protrusions (14c) at least partially surround the pedestal part (18) in the connecting region (18c).

2. Device according to Claim 1, **characterized in that** the protrusions (14c) and the connecting region (18c) of the pedestal part (18) are of V-shaped design.

3. Device according to Claim 2, **characterized in that** the V-shaped protrusions (14c) converge downwards in the static mount loading direction.

4. Device according to one of the preceding claims, **characterized in that** the protrusions (14c) and the corresponding connecting region (18c) of the pedestal part (18) are aligned conically (angle α) with respect to one another.

5. Device according to one of the preceding claims, **characterized in that** the pedestal part (18) is designed such that the length of the bore (18a) which receives the screw (16) is at least 4 times the nominal diameter of the screw (16).

6. Device according to one of the preceding claims, **characterized in that** the bore (14a) in the mount core (14) has a section (14c) of relatively large diameter, which section (14c) receives the head (16a) of the screw (16) within the mount core (14).

7. Device according to one of the preceding claims, **characterized in that**, in the case of a substantially vertical mount loading direction, the central axis (16c) of the screw (16) is inclined by approximately 6 degrees with respect to a horizontal (26) such that imaginary elongations of the connecting surfaces (18b, 14b), which run perpendicular thereto, on the pedestal part (18) and on the mount core (14) intersect the mount central axis (22) above the screw (16).

8. Device according to Claim 7, **characterized in that** the engine mount (12) is arranged such that its central axis (22) is inclined by approximately 16 degrees with respect to a vertical (24) and oppositely to the inclination of the connecting surfaces (18b, 14b) of the pedestal part (18) and mount core (14).

## Revendications

1. Dispositif comprenant un palier d'unité amortissant les vibrations, fixé sur un bras de support (20) d'une unité, en particulier pour véhicules automobiles, un noyau de palier (14) saillant depuis le palier d'unité (12) étant vissé au moyen d'une vis (16) à la partie de douille (18) du bras de support (20) à travers des alésages correspondants (14a, 18a), et la vis (16) traversant des surfaces de raccordement correspondantes (14b, 18b) du noyau de palier (14) et de la partie de douille (18), l'axe médian (16c) de la vis (16) s'étendant essentiellement perpendiculairement à la direction de charge de palier verticale (24) du palier d'unité (12), et la partie de douille (18) et le noyau de palier (14) coopérant en outre par engagement par correspondance géométrique au moins dans la direction de charge de palier (24), **caractérisé en ce que** des saillies (14c) dépassant la surface de raccordement de palier (14b) sont réalisées sur le noyau de palier (14), lesquelles entourent au moins en partie la partie de douille (18) dans la région de raccordement (18c).

2. Dispositif selon la revendication 1, **caractérisé en ce que** les saillies (14c) et la région de raccordement (18c) de la partie de douille (18) sont réalisées en forme de V.

3. Dispositif selon la revendication 2, **caractérisé en ce que** les saillies en forme de V (14c) convergent vers le bas dans la direction de charge de palier statique.

4. Dispositif selon l'une quelconque des revendications précédentes, **caractérisé en ce que** les saillies (14c) et la région de raccordement correspondante (18c) de la partie de douille (18) sont orientées coniquement (angle α) l'une par rapport à l'autre.

5. Dispositif selon l'une quelconque des revendications précédentes, **caractérisé en ce que** la partie de douille (18) est réalisée de telle sorte que la longueur de l'alésage (18a) recevant la vis (16) vaut au moins 4 fois le diamètre nominal de la vis (16).

6. Dispositif selon l'une quelconque des revendications précédentes, **caractérisé en ce que** l'alésage (14a) présente dans le noyau de palier (14) une portion (14c) de plus grand diamètre, qui reçoit la tête (16a) de la vis (16) à l'intérieur du noyau de palier (14).

7. Dispositif selon l'une quelconque des revendications précédentes, **caractérisé en ce que** dans le cas d'une direction de charge de palier essentiellement verticale, l'axe médian (16c) de la vis (16) est incliné d'environ 6 degrés par rapport à une horizontale (26), de telle sorte que des prolongements imaginaires des surfaces de raccordement (18b, 14b) s'étendant perpendiculairement à celle-ci coupent au niveau de la partie de douille (18) et du noyau de palier (14) l'axe médian de palier (22) au-dessus de la vis (16).

8. Dispositif selon la revendication 7, **caractérisé en ce que** le palier d'unité (12) est disposé de telle sorte que son axe médian (22) soit incliné d'environ 16 degrés par rapport à une verticale (24) et à l'opposé de l'inclinaison des surfaces de raccordement (18b, 14b) de la partie de douille (18) et du noyau de palier (14).
